# EUROPÄISCHE PATENTSCHRIFT

(11) **EP 2 703 693 B1**
(45) Veröffentlichungstag und Bekanntmachung des Hinweises auf die Patenterteilung: **13.09.2017**
(21) Anmeldenummer: 13175837.7
(22) Anmeldetag: 10.07.2013
(51) Int. Cl.: F16H 57/08

(54) **Planetenträger**
Planet carrier
Support épicycloïdal

(30) Priorität: 08.08.2012 DE 102012214023
(43) Veröffentlichungstag der Anmeldung: 05.03.2014
(73) Patentinhaber: Siemens Aktiengesellschaft, 80333 München (DE)
(72) Erfinder: Boland, Thomas, 46399 Bocholt (DE); Kamps, Alexander, 46414 Rhede (DE)

(56) Entgegenhaltungen:
- WO-A1-2009/083657
- WO-A1-2011/077869
- GB-A- 274 039

## Beschreibung

Die vorliegende Erfindung betrifft ein Planetengetriebe.

Planetengetriebe sind bekannt aus WO2009/083657 A1 (Moventas) 09.07.2009, welche den nächstliegenden Stand der Technik bildet, und WO2011/077869 A1 (Honda) 30.06.2011.

Der Erfindung liegt die Aufgabe zugrunde, ein verbessertes Planetengetriebe bereit zu stellen.

Die Aufgabe wird durch ein Planetengetriebe mit einem Planetenträger, einem Planetenträgerlager und einem Distanzring gelöst. Der Planetenträger weist einen an einer Stirnfläche einer Wange des Planetenträgers angeordneten Wellenzapfen auf. Auf einer Außenumfangsfläche des Wellenzapfens ist an einem der Stirnfläche zugewandten Ende des Wellenzapfens ein Lagersitz ausgebildet. In dem Lagersitz ist das Planetenträgerlager angeordnet. Unmittelbar an den Lagersitz anschließend weist der Planetenträger eine ringförmige, koaxial zum Wellenzapfen verlaufende Nut auf, welche die Stirnfläche und die Außenumfangsfläche hinterschneidet. Der Distanzring, der axial zwischen dem Planetenträgerlager und der Wange in der Nut angeordnet ist, ist außenzentriert.

Der Planetenträger dient der Lagerung von Planetenrädern, die in einem Planetengetriebe mit einem Sonnenrad und einem Hohlrad in Eingriff stehen. Der Planetenträger umfasst eine Wange. An einer Stirnseite der Wange ist ein Wellenzapfen angeordnet. Der Wellenzapfen kann zumindest ein Teil einer An- oder Abtriebswelle sein. Je nach Anwendung kann der Wellenzapfen hohl sein. Der Planetenträger weist mindestens einen Lagersitz zur Montage eines Planetenträgerlagers, z.B. eines Wälzlagers, auf. Mittels dieses Lagers kann der Planetenträger gegenüber einem Gehäuseteil des Planetengetriebes drehbar gelagert sein. Der Lagersitz ist dabei auf einer Außenumfangsfläche des Wellenzapfens, d.h. einer äußeren Mantelfläche des Wellenzapfens, angeordnet.

Am Übergang von dem sich im Wesentlichen axial erstreckenden Wellenzapfen des Planetenträgers zu der sich im Wesentlichen radial erstreckenden Wange des Planetenträgers wird eine durch den Wellenabsatz hervorgerufene Kerbwirkung durch eine entsprechende Bauteildimensionierung kompensiert. Dies wird erreicht durch eine unmittelbar an den Lagersitz anschließende, ringförmige, koaxial zum Wellenzapfen verlaufende Nut, welche die Stirnfläche und die Außenumfangsfläche hinterschneidet. Durch den Hinterschnitt der Mantelfläche des Wellenzapfens und der Stirnfläche der Wange des Planetenträgers weist die Nut einen relativ großen Radius bzw. mehrere aneinander gereihte Radien auf. Auf diese Weise kann die Kerbwirkung wesentlich verringert werden.

Vorzugsweise weist der Planetenträger an den beiden äußeren Stirnseiten seiner Wangen jeweils einen Lagersitz zur Aufnahme eines Lagers auf; in diesem Fall kann die erfindungsgemäße Nut auf beiden Seiten des Planetenträgers ausgebildet sein.

Die axiale Anlage eines in dem Lagersitz angeordneten Planetenträgerlagers erfolgt über einen Distanzring, der axial zwischen dem Planetenträgerlager und der Wange des Planetenträgers angeordnet ist.

Gemäß der Erfindung ist der Distanzring außenzentriert. Bisher wurde der Distanzring innenzentriert, d.h. radial auf der Mantelfläche des Planetenträgers geführt, welche auch den Lagersitz zur Aufnahme des Planetenträgerlagers ausbildet. Der Radius zur Verminderung der Kerbwirkung ist hierbei axial auf die Breite (= axiale Ausdehnung) des Distanzrings abzüglich der zur Führung des Distanzrings erforderlichen Länge begrenzt. Demgegenüber wird gemäß der vorliegenden Erfindung der Distanzring nicht auf der beschriebenen Mantelfläche des Planetenträgers geführt, sondern auf einem mittels der Nut radial weiter außen zusätzlich geschaffenen Absatz. Auf diese Weise kann sich der Radius zur Verminderung der Kerbwirkung über die gesamte Breite des Distanzrings zuzüglich der Breite eines radial unterhalb des Lagerinnenrings positionierbaren Krümmungsradius erstrecken. Im Vergleich zu den bisherigen Lösungen ermöglicht also die Außenzentrierung des Distanzrings einen wesentlich größeren Radius zur Verminderung der Kerbwirkung, bei gleichem oder sogar kleinerem Bauraum des Planetengetriebes wie bzw. als bei den bisherigen Lösungen.

Indem anstatt einer Innenzentrierung des Distanzrings, d.h. einer Führung des Distanzrings auf der Mantelfläche des Wellenzapfens, eine Außenzentrierung des Distanzrings, d.h. eine Führung des Distanzrings auf den in der Wange gelegenen Nutflächen, erfolgt und somit der Distanzring mit seinem radial innenliegenden Ende von der Mantelfläche des Wellenzapfens getrennt ist, sozusagen "in der Luft schwebt", ergibt sich die vorteilhafte Möglichkeit, den nicht beaufschlagten Bereich unmittelbar neben dem Lagerinnenring für den zur Verminderung der Kerbwirkung erforderlichen Planetenträgerradius auszunutzen.

Bisher war es üblich, den Distanzring auf dem Wellenzapfen zu zentrieren. Die Neuerung der vorliegenden Erfindung ist es nun, dass der Distanzring nicht auf dem Wellenzapfen, sondern in dem Hinterschnitt des Planetenträgers zentriert wird. Nur dadurch ist es möglich, den Wellenzapfen axial gesehen im Bereich des Distanzringes, und teilweise auch im Bereich des Lagers, radial zu hinter- bzw. unterschneiden, um so einen verbesserten Kraftfluss zu erreichen.

Vorteilhafte Ausgestaltungen und Weiterbildungen der Erfindung sind in den abhängigen Ansprüchen angegeben.

Gemäß einer bevorzugten Ausgestaltung der Erfindung ist die Nut so geformt, dass ihr Schnittbild in einer die Rotationsachse des Planetenträgers enthaltenden Schnittebene zwei nicht gekrümmte Abschnitte aufweist, welche durch einen gekrümmten Abschnitt voneinander getrennt sind. Die nicht gekrümmten Abschnitte können als Anlageflächen für den Distanzring dienen, der dadurch geführt wird. Durch die zwei nicht gekrümmten Abschnitte kann ein in die Nut eingelegter Distanzring verlässlich außenzentriert geführt werden, was eine vorteilhafte Ausbildung des zur Verminderung der Kerbwirkung nötigen Radius ermöglicht.

Gemäß einer bevorzugten Ausgestaltung der Erfindung weisen die zwei nicht gekrümmten Abschnitte zueinander einen Winkel von 90 Grad auf. Durch den rechtwinkligen Versatz können die beiden als Anlageflächen verwendbaren Flächen einfach hergestellt werden, leichter als bei einem Versatz unter einem von 90 Grad abweichenden Winkelmaß.

Gemäß einer bevorzugten Ausgestaltung der Erfindung verläuft ein erster der zwei nicht gekrümmten Abschnitte parallel zur Stirnfläche und ein zweiter der zwei nicht gekrümmten Abschnitte parallel zur Außenumfangsfläche, aber mit entgegen gesetzter Orientierung. Die Angabe "mit entgegen gesetzter Orientierung" bedeutet, dass in einem Schnittbild der Nut in einer die Rotationsachse des Planetenträgers enthaltenden Schnittebene die Außenumfangsfläche parallel zu dem zweiten nicht gekrümmten Abschnitt verläuft, aber um 180 Grad gedreht. Auf diese Weise ergibt sich eine klare und einfach herzustellende Winkellage der für die Anlage des Distanzrings nutzbaren Flächen gegenüber der Wellen-Mantelfläche und der Wangen-Stirnfläche des Planetenträgers.

Gemäß einer bevorzugten Ausgestaltung der Erfindung liegt eine der Wange zugewandte Stirnseite eines Innenrings des Planetenträgerlagers an dem Distanzring an. Dadurch wird das Planetenträgerlager in einem vorgegebenen Abstand zu der Wange gehalten.

Gemäß einer bevorzugten Ausgestaltung der Erfindung liegt der Distanzring an dem Planetenträger lediglich in den zwei nicht gekrümmten Abschnitten an. Durch eine Fase am Distanzring, die zwischen den beiden gekrümmten Abschnitten zu liegen kommt, ist in diesem Bereich ein Luftraum gebildet.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Planetenträger;
- Fig. 2: einen Schnitt durch ein Planetengetriebe im Bereich der Nut; und
- Fig. 3: einen Schnitt durch ein Planetengetriebe.

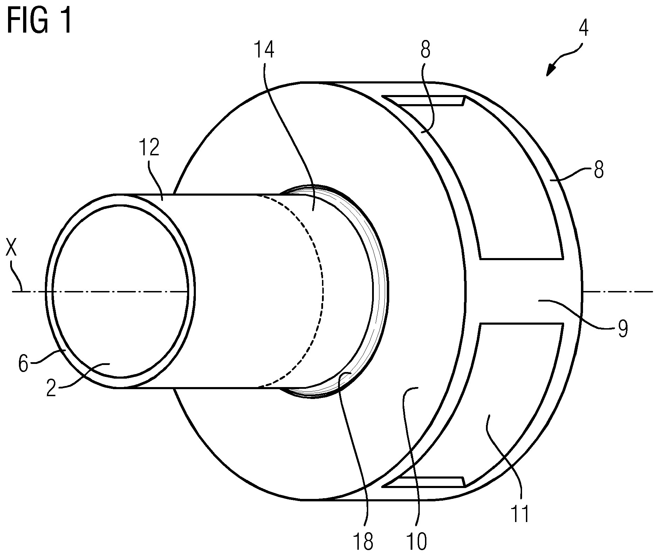

Fig. 1 zeigt einen Planetenträger 4 für ein Planetengetriebe, z.B. für eine Windkraftanlage (= WKA). Der Planetenträger 4 umfasst zwei parallele Wangen 8, die durch Stege 9 miteinander verbunden sind. Zwischen den Stegen 9 sind Aussparungen 11 vorhanden, in welche Planetenräder eingesetzt und drehbar gelagert werden können. An einer von den Aussparungen 11 abgewandten Stirnfläche 10 einer Wange 8 ist ein Wellenzapfen 6 angeordnet. Der Wellenzapfen 6 wird auch als Planetenträgerwelle bezeichnet. Der zylindrische Wellenzapfen 6 weist einen Hohlraum 2 auf, in den z.B. eine An- oder Abtriebswelle eingesteckt werden kann. Beispielweise kann eine Rotorwelle einer Windenergieanlage mit dem Wellenzapfen 6 verbunden sein. Der Wellenzapfen kann einstückig mit der Wange ausgebildet sein, z.B. in einem Guss, oder durch ein Verbindungsverfahren wie Schweißen mit der Wange verbunden sein.

Am Übergang zwischen dem Wellenzapfen 6 und der Wange 8, d.h. entlang des Rings, an dem die Außenumfangsfläche 12 des Wellenzapfens 6 in die Stirnfläche 10 der Wange 8 übergeht, ist koaxial zur Achse X des Wellenzapfens 6 eine Nut 18 ausgeformt. Die Nut 18 bildet eine Verbindungsfläche zwischen der äußeren Mantelfläche 12 des Wellenzapfens 6 und der Stirnfläche 10 der Wange 8. Die Nut 18 hinterschneidet sowohl die äußere Mantelfläche 12 des Wellenzapfens 6 als auch die Stirnfläche 10 der Wange 8. An dem der Stirnfläche 10 zugewandten Ende des Wellenzapfens 6 ist an der Außenumfangsfläche 12, d.h. der äußeren Mantelfläche, des Wellenzapfens 6 ein Lagersitz 14 ausgebildet, der zur Anordnung eines Planetenträgerlagers geeignet ist.

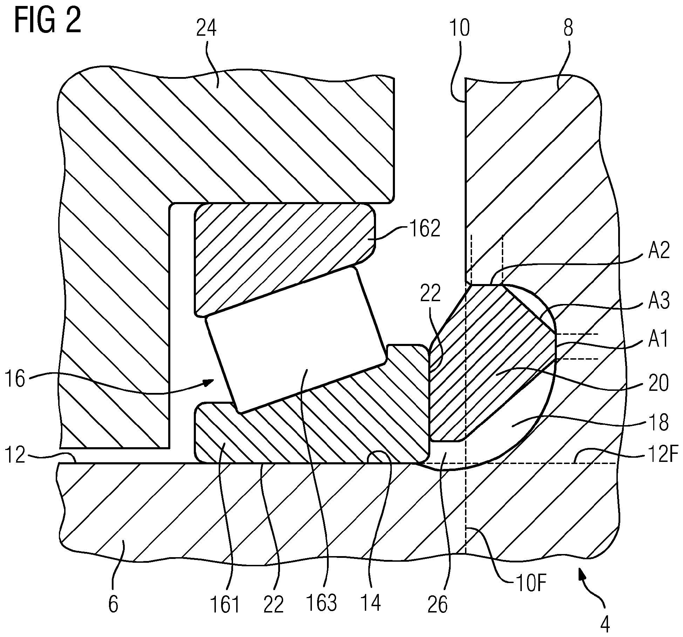

Fig. 2 zeigt einen Schnitt durch ein Planetengetriebe im Bereich der Nut 18 eines erfindungsgemäßen Planetenträgers 4. Das Planetengetriebe umfasst neben einem Sonnenrad, dem Planetenträger 4 mit darin gelagerten Planetenrädern und einem Hohlrad ein Planetenträgerlager 16. Der Planetenträger 4 ist mittels des Planetenträgerlagers 16, das in dem in Fig. 2 dargestellten Ausführungsbeispiel als ein Wälzlager, insbesondere als ein Kegelrollenlager, ausgebildet ist, gegen ein Gehäuseteil 24 drehbar gelagert. Das in einem Lagersitz 14 des Wellenzapfens 6 angeordnete Planetenträgerlager 16 weist einen Lagerinnenring 161, einen Lageraußenring 162 sowie zwischen diesen beiden Ringen 161, 162 eingesetzte Walzen 163 auf.

In einem Übergangsbereich zwischen dem Wellenzapfen 6 und der Wange 8 ist eine Nut 18 ausgebildet, welche die Außenumfangsfläche 12 des Wellenzapfens 6 bzw. deren gedachte Fortsetzung 12F hinterschneidet. Außerdem hinterschneidet die Nut 18 die Stirnfläche 10 der Wange 8 bzw. deren gedachte Fortsetzung 10F. Im Schnitt der Nut 18 sind zwei nicht gekrümmte Abschnitte A1, A2 erkennbar, die durch einen gekrümmten Abschnitt A3 beabstandet sind. Der eine nicht gekrümmte Abschnitt A1 ist parallel zur Stirnfläche 10 der Wange 8. Der andere nicht gekrümmte Abschnitt A2 ist parallel zur Außenumfangsfläche 12 des Wellenzapfens 6, ist aber entgegengesetzt orientiert. Die sonstigen Abschnitte der Nut 18 sind konkav gekrümmt.

In die Nut 18 ist ein Distanzring 20 eingesetzt, welcher an einer der Wange 8 zugewandten Stirnfläche 22 des Lagerinnenrings 161 und den beiden nicht gekrümmten Abschnitten A1, A2 der Nut 18 anliegt. Das Planetenträgerlager 16 ist durch den Distanzring 20 von der Wange 8 beabstandet. Aufgrund der Außenzentrierung des Distanzrings 20 mithilfe der Abschnitte A1, A2 befindet sich zwischen dem radial innersten Teil des Distanzrings 20 und dem radial innerhalb davon gelegenen Bereich der Nut 18 ein Luftraum 26.

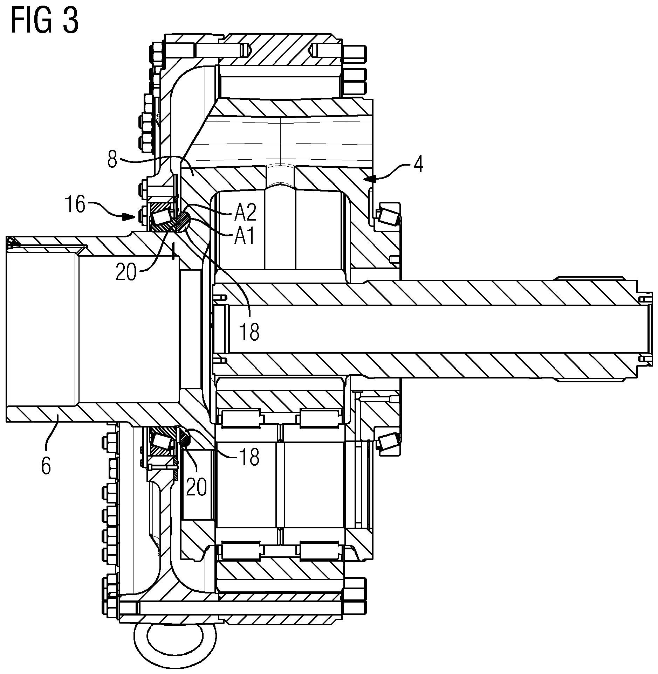

Fig. 3 zeigt einen Schnitt durch ein WKA-Aufsteckgetriebe, umfassend ein einstufiges Planetengetriebe als langsame, erste Stufe und ein dem Planetengetriebe nachgeschaltetes zweistufiges Stirnradgetriebe. In der zum Aufsteck-Hohlwellenzapfen 6 hin gelegenen Wange 8 des Planetenträgers 4 und in dem unmittelbar an die Wange anschließende Bereich des Wellenzapfens 6 ist eine Nut 18 ausgeformt, die die Stirnseite der Wange 8 und die Außenumfangsfläche des Wellenzapfens 6 hinterschneidet. Darin eingesetzt ist ein außenzentrierter Distanzring 20, der an einem Innenring eines Planetenträgerlagers 16 anliegt. Außerdem liegt der Distanzring an zwei Abschnitten der Wange an, nämlich an einem axial von dem Wellenzapfen 6 am weitesten entfernten Abschnitt A1 und an einem radial von dem Wellenzapfen 6 am weitesten entfernten Abschnitt A2 der Nut 18.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Planetengetriebe, umfassend einen Planetenträger (4) mit einem an einer Stirnfläche (10) einer Wange (8) des Planetenträgers (4) angeordneten Wellenzapfen (6) und ein Planetenträgerlager (16),
wobei auf einer Außenumfangsfläche (12) des Wellenzapfens (6) an einem der Stirnfläche (10) zugewandten Ende des Wellenzapfens (6) ein Lagersitz (14) ausgebildet ist, in welchem das Planetenträgerlager (16) angeordnet ist, und
wobei der Planetenträger (4) unmittelbar an den Lagersitz (14) anschließend eine ringförmige, koaxial zum Wellenzapfen (6) verlaufende Nut (18) aufweist, welche die Stirnfläche (10) und die Außenumfangsfläche (12) hinterschneidet, **dadurch gekennzeichnet, dass**
ein außenzentrierter Distanzring (20) axial zwischen dem Planetenträgerlager (16) und der Wange (8) in der Nut (18) angeordnet ist.

2. Planetengetriebe nach Anspruch 1,
wobei die Nut (18) so geformt ist, dass ihr Schnittbild in einer die Rotationsachse (X) des Planetenträgers (4) enthaltenden Schnittebene zwei nicht gekrümmte Abschnitte (A1, A2) aufweist, welche durch einen gekrümmten Abschnitt (A3) voneinander getrennt sind.

3. Planetengetriebe nach Anspruch 2,
wobei die zwei nicht gekrümmten Abschnitte (A1, A2) zueinander einen Winkel von 90 Grad aufweisen.

4. Planetengetriebe nach Anspruch 2 oder 3,
wobei einer (A1) der zwei nicht gekrümmten Abschnitte (A1, A2) parallel zur Stirnfläche (10) verläuft und ein anderer (A2) der zwei nicht gekrümmten Abschnitte (A1, A2) parallel zur Außenumfangsfläche (12), aber mit entgegen gesetzter Orientierung verläuft.

5. Planetengetriebe nach einem der Ansprüche 1 bis 4,
wobei eine der Wange (8) zugewandte Stirnseite (22) eines Innenrings (161) des Planetenträgerlagers (16) an dem Distanzring (20) anliegt.

6. Planetengetriebe nach einem der Ansprüche 2 bis 4,
wobei der Distanzring (20) an dem Planetenträger (4) lediglich in den zwei nicht gekrümmten Abschnitten (A1, A2) anliegt.

## Claims

1. Planetary gearbox, comprising a planetary carrier (4) with a shaft journal (6) arranged on a front face (10) of a side plate (8) of the planetary carrier (4) and a planetary carrier bearing (16),
wherein a bearing seating (14), in which the planetary carrier bearing (16) is arranged, is embodied on an outer circumferential surface (12) of the shaft journal (6) on an end of the shaft journal (6) facing the front face (10), and wherein the planetary carrier (4) has an annular groove (18) directly connected to the bearing seating (14) and running coaxially with the shaft journal (6), which undercuts the front face (10) and the outer circumferential surface (12), **characterised in that**
an outwardly centred spacer ring (20) is arranged axially between the planetary carrier bearing (16) and the side plate (8) in the groove (18).

2. Planetary gearbox (4) according to claim 1,
wherein the groove (18) is shaped in such a way that its cross-section has two non-curved sections (A1, A2) in a sectional plane containing the axis of rotation (X) of the planetary carrier (4), which are separated from each other by a curved section (A3).

3. Planetary gearbox (4) according to claim 2,
wherein the two non-curved sections (A1, A2) are at an angle of 90 degrees to each other.

4. Planetary gearbox (4) according to claim 2 or 3,
wherein one (A1) of the two non-curved sections (A1, A2) runs parallel to the front face (10) and another (A2) of the two non-curved sections (A1, A2) runs parallel to the outer circumferential surface (12), but with the opposite orientation.

5. Planetary gearbox according to one of claims 1 to 4,
wherein a front side (22) of an inner ring (161) of the planetary carrier bearing (16) facing the side plate (8) abuts the spacer ring (20).

6. Planetary gearbox according to one of claims 2 to 4,
wherein the spacer ring (20) only abuts the planetary carrier (4) in the two non-curved sections (A1, A2).

## Revendications

1. Engrenage planétaire comprenant un porte-satellite (4) ayant un tourillon (6) d'arbre monté sur une surface (10) frontale d'une joue (8) du porte-satellite (4) et un palier (16) de porte-satellite,
dans lequel, sur une surface (12) périphérique extérieure du tourillon (6) d'arbre, est formé, à une extrémité, tournée vers la surface (10) frontale, du tourillon (6) d'arbre, un siège (14) de palier, dans lequel le palier (16) du porte-satellite est monté et
dans lequel le porte-satellite (4) a, directement sur le siège (14) du palier, en se raccordant, une rainure (18) annulaire s'étendant coaxialement au tourillon (6) d'arbre et coupant vers l'arrière la surface (10) frontale et la surface (12) périphérique extérieure,
**caractérisé en ce qu'**
une bague (20) d'entretoisement centrée à l'extérieur est montée axialement dans la rainure (18), entre le palier (16) du porte-satellite et la joue (8).

2. Transmission planétaire suivant la revendication 1,
dans laquelle la rainure (18) est conformée de manière à ce que sa vue en coupe, dans un plan de coupe contenant l'axe (X) de rotation du porte-satellite (4), a deux tronçons (A1, A2) non incurvés, qui sont séparés l'un de l'autre par un tronçon (A3) incurvé.

3. Transmission planétaire suivant la revendication 2,
dans laquelle les deux tronçons (A1, A2) non incurvés font entre eux un angle de 90 degrés.

4. Transmission planétaire suivant la revendication 2 ou 3,
dans laquelle l'un (A1) des deux tronçons (A1, A2) non incurvés s'étend parallèlement à la surface (10) frontale et un autre (A2) des deux tronçons (A1, A2) non incurvés s'étend parallèlement à la surface (12) périphérique extérieure mais en ayant une orientation opposée.

5. Transmission planétaire suivant l'une des revendications 1 à 4,
dans laquelle un côté (22) frontal, tourné vers la joue (8), d'une bague (161) intérieure du palier (16) du porte-satellite s'applique à la bague (20) d'entretoisement.

6. Transmission planétaire suivant l'une des revendications 2 à 4,
dans laquelle la bague (20) d'entretoisement sur le porte-satellite (4) s'applique seulement aux deux tronçons (A1, A2) non incurvés.
